# EUROPEAN PATENT SPECIFICATION

(11) **EP 4 495 634 B1**
(45) Date of publication and mention of the grant of the patent: **04.11.2026**
(21) Application number: 24184321.8
(22) Date of filing: 25.06.2024
(51) Int. Cl.: G01S 19/21

(54) **GNSS SPOOFING DETECTION AND ALERT USING SBAS SATELLITES**
GNSS-SPOOFING-DETEKTION UND -WARNUNG UNTER VERWENDUNG VON SBAS-SATELLITEN
DÉTECTION ET ALERTE DE MYSTIFICATION GNSS À L'AIDE DE SATELLITES SBAS

(30) Priority: 19.07.2023 IN 202311048573; 01.09.2023 US 202318460326
(43) Date of publication of application: 22.01.2025
(73) Proprietor: Honeywell International Inc., Charlotte, NC 28202 (US)
(72) Inventor: KUMAR, Perumal, Charlotte, 28202 (US); LENKA, Sanjay, Charlotte, 28202 (US)
(74) Representative: Haseltine Lake Kempner LLP

(56) References cited:
- EP-A1- 3 805 798
- CN-A- 114 966 765
- MYKHAILO LYTVYN ET AL: "How can an orbit prediction module speed up the TTFF and help to authenticate the position?", SATELLITE NAVIGATION TECHNOLOGIES AND EUROPEAN WORKSHOP ON GNSS SIGNALS AND SIGNAL PROCESSING, (NAVITEC), 2012 6TH ESA WORKSHOP ON, IEEE, 5 December 2012 (2012-12-05), pages 1 - 6, XP032322293, ISBN: 978-1-4673-2010-8, DOI: 10.1109/NAVITEC.2012.6423124

## Description

### CROSS-REFERENCE TO RELATED APPLICATION

This application claims priority to Indian Provisional Patent Application No. 202311048573 filed on July 19, 2023

### BACKGROUND

Global navigation satellite system (GNSS) spoofing results in the incorrect annunciation of actual GNSS receiver position outputs for a vehicle such as an aircraft, thereby resulting in potential hazards to avionics safety. The GNSS receivers typically have a 24 channel receiver design and face challenges due to spoofing threats, which leads the GNSS receivers to output erroneous position outputs. This potential hazard can result in aircraft being off track during flight, or can be catastrophic during an aircraft landing approach.

The GNSS receiver outputs are consumed by multiple aircraft systems such as the Automatic Dependent Surveillance - Broadcast (ADS-B), the Enhanced Ground Proximity Warning System (EGPWS), the terrain awareness and warning system (TAWS), flight control systems, and the like. Also, the required navigation performance (RNP) of an aircraft can be deteriorated due to spoofing events. Thus, any spoofing threats need to be detected to ensure that GNSS receivers are not susceptible to such spoofing threats.
Document CN114966765 discloses a satellite navigation message monitoring method based on inter-satellite measurement.
Document EP3805798 relates to identifying second GNSS navigation data as potentially manipulated or as trustworthy at least partially based on previously received first GNSS navigation data.
Document "How can an orbit prediction module speed up the TTFF and help to authenticate the position?", by Mykhailo Lytvyn et al describes a modular and costeffective GNSS orbit prediction algorithm for reducing time to first fix as well as trusted positioning.

### SUMMARY

A method and system for detecting satellite signal spoofing are provided. The method comprises monitoring a plurality of satellite signals, from GNSS satellites and Satellite-based Augmentation System (SBAS) satellites, with a GNSS receiver; obtaining a current time and satellite orbital parameters from the GNSS receiver, based on real-time satellite signals received from the GNSS and SBAS satellites through a GNSS antenna. The method further comprises retrieving past satellite orbital parameters from the GNSS receiver stored in a memory; calculating predicted satellite orbital positions for the GNSS and SBAS satellites based on the past satellite orbital parameters stored in the memory, with respect to the current time; and computing current satellite orbital positions for the GNSS and SBAS satellites based on the current time and satellite orbital parameters, obtained based on current satellite signals from the GNSS and SBAS satellites received by the GNSS receiver. The method then determines at least one first distance value between two or more of the GNSS and/or SBAS satellites based on the predicted satellite orbital positions; determines at least one second distance value between the two or more GNSS and/or SBAS satellites based on the current satellite orbital positions; and compares the at least one first distance value and the at least one second distance value to obtain at least one discriminator value. The method determines whether the at least one discriminator value is greater than a threshold level; and outputs a spoofing alert signal when the at least one discriminator value is greater than the threshold level.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a block diagram of a system for satellite signal spoofing detection, according to one embodiment;
Figure 2 is a schematic diagram of an example system, which can be used to implement satellite signal spoofing detection techniques, such as shown in Figure 1;
Figure 3 is a flow diagram of a method for GNSS spoofing detection, according to an example implementation; and
Figure 4 is a schematic diagram of an example system, which can be implemented with a GNSS spoofing detection algorithm.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

Systems and methods for implementing GNSS spoofing detection and alert using GNSS satellites and satellite-based augmentation system (SBAS) satellites are described herein.

The present methods provides for the detection and mitigation of spoofing threats to GNSS receivers, such as Global Positioning System (GPS) receivers. In addition, the present approach can be adapted for spoofing detection in other GNSS implementations, such as for GALILEO satellites, BEIDOU satellites, and GLONASS satellites.

The present approach can use various satellite distance computations based on the distance information between GNSS and SBAS satellites, or the distance information between a GNSS satellite and other GNSS satellites. When the GNSS receiver is a multi-constellation receiver, the distance information between GNSS satellites of different constellations can be used in various combinations to determine if spoofing is present.

The SBAS satellites are geostationary satellite systems that provide GNSS augmentation corrections. Examples of such satellite systems include Wide Area Augmentation System (WAAS) satellites, GPS-Aided GEO Augmented Navigation (GAGAN) satellites, European Geostationary Navigation Overlay Service (EGNOS) satellites, Multi-functional Satellite Augmentation System (MSAS) satellites, and System for Differential Corrections and Monitoring (SDCM) satellites. These satellite systems utilize reference stations, which are geographically distributed throughout the SBAS service area, receive GNSS signals and forward these signals to a master station. Since the locations of the reference stations are accurately known, the master station can accurately calculate wide-area corrections.

In general, the present spoofing detection and alert techniques compute the distance(s) of GNSS/SBAS satellites from SBAS/GNSS satellites, and this distance information can be used to compare with real time data to provide for spoofing detection. The spoofing detection can be done by computing the distance information of specific GNSS satellites with specific SBAS satellites, or a combination of GNSS satellites with other SBAS satellites where the distance can be computed. If spoofing exists, then the GNSS satellite(s) distance(s) computed pertaining to the SBAS satellites will vary with considerable margin, and thereby the spoofing can be detected and alerted.

In various embodiments, the present GNSS spoofing detection algorithms can be ported into a flight management system (FMS) of an aircraft, can be hosted in at least one GNSS receiver onboard a vehicle, or can be hosted in a standalone processor that is coupled to a GNSS receiver. In addition, the output of the spoofing detection can be displayed such as on a cockpit display, thus alerting a user such as a pilot so that corrective action can be taken.

The spoofing alert signal can be made available for broadcast to other users that are airborne or on the ground. Alerts can also be broadcast to ensure that other vehicle systems that host GNSS receivers, as well as regulatory authorities, are aware of the GNSS spoofing so that corrective actions can be taken. The broadcasted alerts can ensure safety as vehicles can avoid GNSS usage in vulnerable locations.

The present approach provides for improved navigation of various vehicles, such as land vehicles, aerial vehicles, and sea vehicles. In particular, the present techniques can be applied in various aircraft, such as a manned or unmanned aircraft. Example aircraft include airplanes, helicopters, unmanned aerial vehicles (UAVs), unmanned aircraft systems (UAS), urban air mobility (UAM) vehicles, drones, or the like.

Moreover, when the orbital information is computed using satellite data from other sources, such as retrieving data from the cloud, from GNSS receivers on other aircraft, or from ground stations such as through datalink, the actual position can be computed and thus seamless navigation and RNP can be assured.

Further details regarding the present system and method are described as follows and with reference to the drawings.

The SBAS satellites appear to be located at a fixed point in space when viewed from the earth's surface. As these geostationary satellites are located in a geosynchronous orbit and move in time with the rotation of the earth, the satellites appear motionless at a fixed position in the sky to ground observers. Geostationary satellites are placed in earth-orbit directly over the equator, and revolve in the same direction as the earth rotates (west to east), taking 24 hours to complete one rotation. Geostationary satellites are located approximately 22,237 miles above the earth's surface. Hence, the SBAS satellite orbital information can be easily computed with respect to time pertaining to earth's rotation, and can be available all the time for the GNSS receiver.

The performance of GNSS satellites can be improved by the use of regional SBAS satellites. The SBAS satellites can improve the accuracy and reliability of GNSS information by correcting signal measurement errors and by providing information about the accuracy, integrity, continuity, and availability of the GNSS signals. The SBAS satellites use GNSS measurements taken by accurately located reference stations deployed across a continent. The measured GNSS errors are transferred to a central computing center in a master station, where differential corrections and integrity messages are calculated. These calculations are then broadcast over the covered area using the SBAS satellites and serve as an augmentation, or overlay, to the original GNSS message.

The real-time orbital information of GNSS satellites is transmitted by these satellites in terms of navigation messages and are consumed by GNSS receivers for computing accurate position, velocity, and time. This orbital information can be spoofed and thereby the position computed and output by GNSS receivers can lead to misleading erroneous position information.

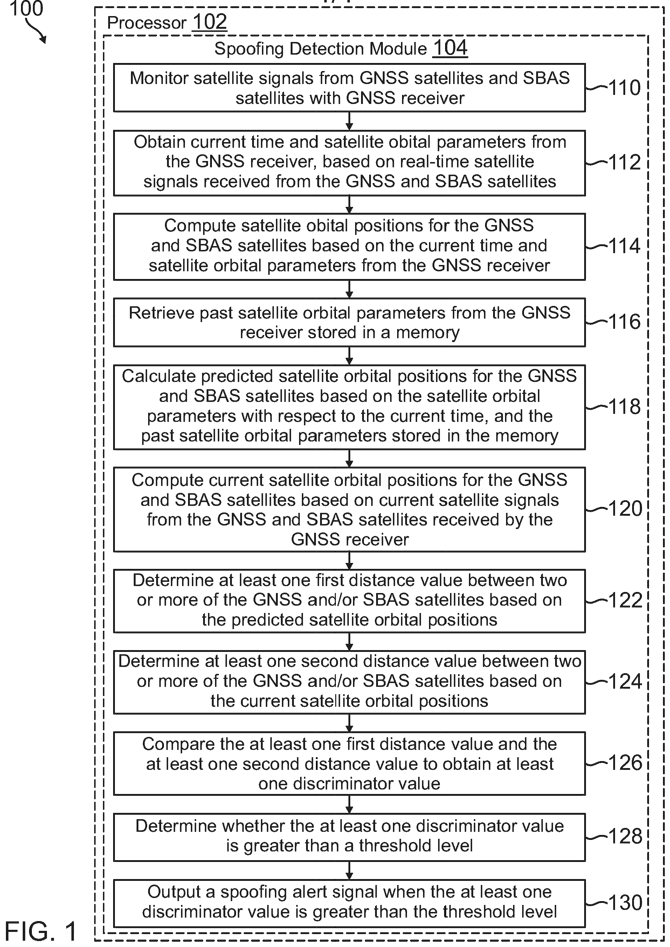

Figure 1 illustrates a system 100 for GNSS satellite signal spoofing detection, according to one embodiment. The system 100 includes at least one processor 102, and a GNSS spoofing detection module 104 operatively coupled with processor 102. The processor 102 can be in a FMS of an aircraft, in a GNSS receiver, or can be a standalone processor, for example.

The spoofing detection module 104 includes instructions, executable by processor 102, to perform a method that comprises monitoring a plurality of satellite signals, from GNSS satellites and SBAS satellites, with a GNSS receiver (block 110). The method obtains a current time and satellite orbital parameters from the GNSS receiver, based on real-time satellite signals received from the GNSS and SBAS satellites through a GNSS antenna (block 112). The method computes satellite orbital positions for the GNSS and SBAS satellites based on the current time and satellite orbital parameters from the GNSS receiver (block 114); and retrieves past satellite orbital parameters from the GNSS receiver stored in a memory (block 116). The method calculates predicted satellite orbital positions for the GNSS and SBAS satellites based on the satellite orbital parameters with respect to the current time, and the past satellite orbital parameters stored in the memory (block 118). The method computes current satellite orbital positions for the GNSS and SBAS satellites based on current satellite signals from the GNSS and SBAS satellites received by the GNSS receiver (block 120).

The method then determines at least one first distance value between two or more of the GNSS and/or SBAS satellites based on the predicted satellite orbital positions (block 122); and determines at least one second distance value between two or more of the GNSS and/or SBAS satellites based on the current satellite orbital positions (block 124). For example, the at least one first distance value and the at least one second distance value can be determined by distance information comprising: distance information between one or more GNSS and SBAS satellites; distance information between a GNSS satellite and one or more other GNSS satellites; or distance information between multiple GNSS satellites of different constellations.

The method compares the at least one first distance value and the at least one second distance value to obtain at least one discriminator value (block 126); and determines whether the at least one discriminator value is greater than a threshold level (block 128). Outputting a spoofing alert signal occurs when the at least one discriminator value is greater than the threshold level (block 130).

The method can further determine whether the past satellite orbital parameters were updated at a time greater than a time period threshold. If the past satellite orbital parameters were updated at a time greater than the time period threshold, then the method collects real-time satellite orbital information for the GNSS and SBAS satellites from the GNSS receiver, and stores the real-time satellite orbital information in a memory.

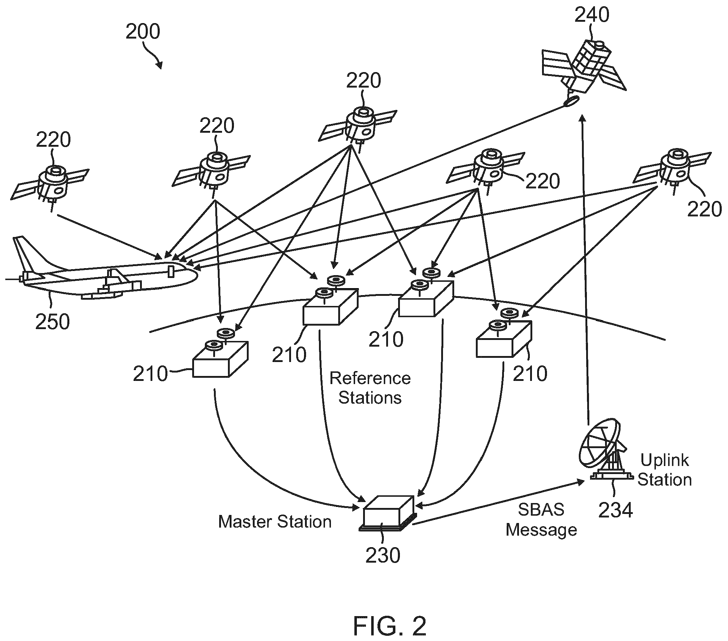

Figure 2 is a schematic diagram of an example system 200, which can be used to implement the present GNSS spoofing detection techniques, such as shown in Figure 1. The system 200 includes a plurality of GNSS tracking reference stations 210, which can be ground-based. The tracking reference stations 210 have reference receivers that are configured to receive and decode real-time GNSS satellite orbital information from a plurality of GNSS satellites 220. The satellite orbital information can be received by tracking reference stations 210 through datalink communication services (e.g., very high frequency (VHF), Satcom, 5G, or the like).

A master station 230 is in operative communication with each of tracking reference stations 210. An uplink station 234 is in operative communication with master station 230. The uplink station 234 is configured to transmit uplink messages to a geo-stationary satellite 240, such as an SBAS satellite.

An aircraft 250 has a GNSS receiver configured to receive and decode satellite orbital data from GNSS satellites 220. The aircraft 250 is also in operative communication with geo-stationary satellite 240. As illustrated in Figure 2, aircraft 250 can be a manned aircraft such as an airplane. Alternatively, other types of aerial vehicles with GNSS receivers can be used, such as helicopters, UAMs, UAVs, UAS vehicles, or the like.

In one embodiment, a spoofing detection engine and alert system is hosted by at least one processor onboard aircraft 250. The processing engine and alert system hosts the present GNSS spoofing detection algorithm, which is operative to detect GNSS spoofing events and to broadcast spoofing alerts. The GNSS and SBAS satellite(s) position is a function of GNSS time. The distance/range between GNSS satellites and SBAS satellites is also a function of GNSS time. The start data is stored in an ideal condition and subsequent data is stored and overwrites prior data with validation from the start data. Further details of the GNSS spoofing detection algorithm are described hereafter.

Various regulatory agencies, airlines, UAMs, UAVs, drones, and the like, can benefit from such spoofing detection and broadcasting of alerts. A flight path for an aircraft can also be planned based on this information.

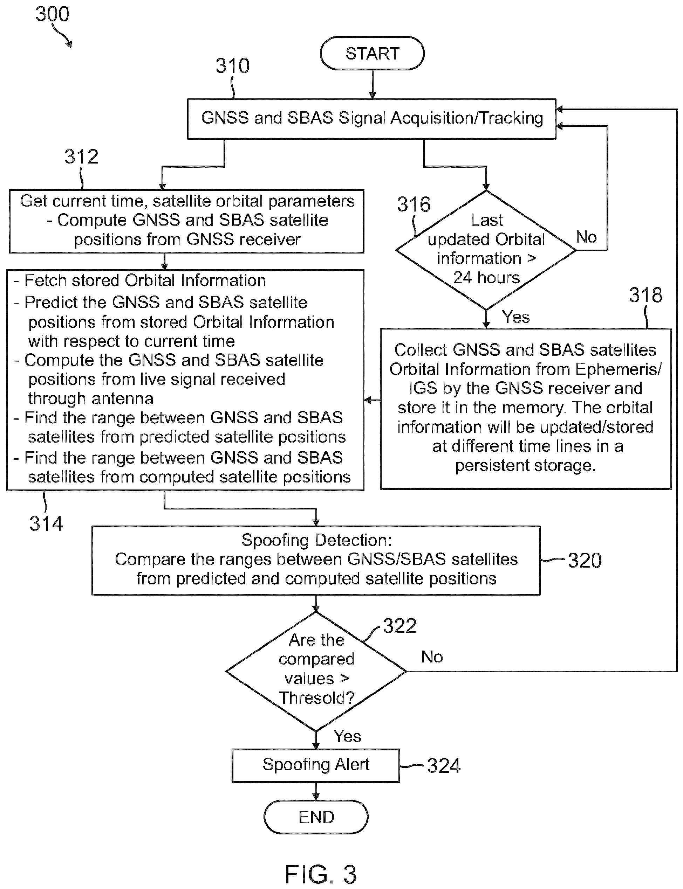

Figure 3 is a flow diagram of a method 300 for GNSS spoofing detection, according to an example implementation. At the start, method 300 performs GNSS and SBAS signal acquisition and tracking (block 310), by monitoring GNSS and SBAS signals with a GNSS receiver. The method 300 gets a current time and satellite orbital parameters from the GNSS receiver, and computes GNSS and SBAS satellite positions based on the current time and satellite orbital parameters from the GNSS receiver (block 312). The method 300 then fetches stored orbital information; predicts the GNSS and SBAS satellite positions from the stored orbital information, with respect to the current time; computes current GNSS and SBAS satellite orbital positions from live signals received through a GNSS antenna; finds a range between two or more of the GNSS and/or SBAS satellites based on the predicted satellite positions; and finds a range between two or more of the GNSS and/or SBAS satellites based on the computed satellite positions (block 314).

During the GNSS signal acquisition and tracking (block 310), method 300 determines if the last updated orbital information was collected greater than 24 hours ago (block 316). If not, method 300 continues the GNSS signal acquisition and tracking at block 310. If the last updated orbital information was collected greater than 24 hours ago, then method 300 collects GNSS and SBAS satellite orbital information, such as from ephemeris or IGS (International GPS Service), from the GNSS receiver and stores the orbital information in memory (block 318). The orbital information can be updated and stored at different timelines (e.g., 1 to 7 days) in persistent and separate storage locations of the memory. This stored orbital information is made available to method 300 as described above (block 314). For example, past orbital information values can be retrieved from a cloud-based storage database.

The method 300 performs spoofing detection by comparing the range values between the GNSS/SBAS satellites (e.g., between GNSS and SBAS satellites, or between GNSS and GNSS satellites) from the predicted and computed satellite positions (block 320). The method 300 then determines if the compared range values are greater than a threshold (block 322). If not, spoofing is not detected and method 300 returns to the GNSS signal acquisition and tracking at block 310. If the compared values are greater than the threshold at block 322, then method 300 generates a spoofing alert (block 324), which can be sent to a cockpit display, for example, to notify an aircraft pilot of the spoofing detection.

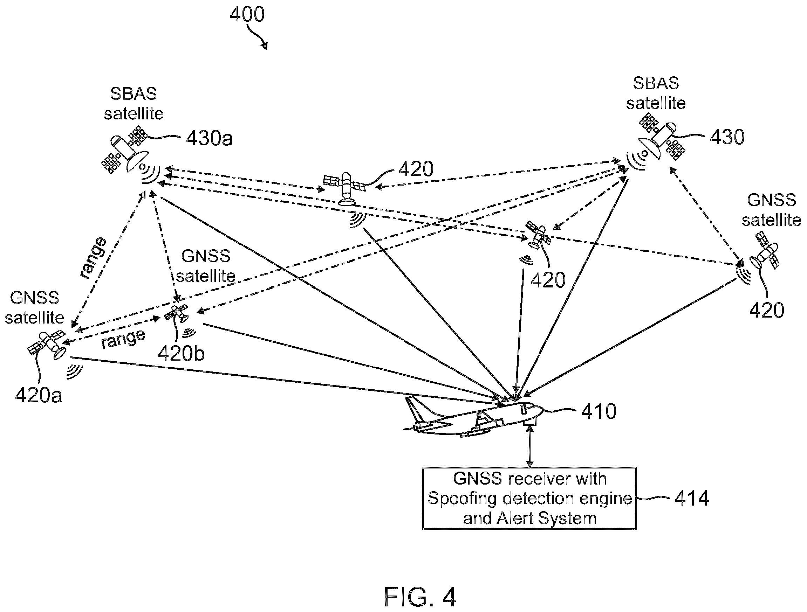

Figure 4 is a schematic diagram of an example system 400, which can be implemented with the present GNSS spoofing detection algorithm. An aircraft 410 has an onboard GNSS receiver with a spoofing detection engine and alert system 414. The onboard GNSS receiver is configured to receive and decode satellite orbital data from a set of GNSS satellites 420. The aircraft 410 is also in operative communication with a set of SBAS satellites 430. As illustrated, aircraft 410 can be a crewed aircraft such as an airplane. The aircraft can be other types of aerial vehicles such as helicopters, UAM, UAVs, UAS vehicles, or the like.

As the SBAS satellites 430 are geo-stationary, their position is fixed and known in Earth-centered, Earth-fixed (ECEF) coordinates. The positions of GNSS satellites 420 (or any constellation of GNSS satellites) are a function of time and are known from the ephemeris stored previously. Thus, the positions do not change often, but updated information can be obtained from the ephemeris and can be verified from past data (e.g., 1-7 days data). The GNSS and SBAS satellite ephemeris are stored (e.g., 1- 7 days).

The spoofing detection algorithm, which is hosted by spoofing detection engine and alert system 414, predicts the relative range between GNSS satellites and/or SBAS satellites with respect to the current time; and calculates the relative range between GNSS satellites and/or SBAS satellites from live signals. The spoofing detection algorithm compares the predicated and computed relative ranges between the GNSS satellites and/or the SBAS satellites; and provides a spoofing alert if the predicted relative range and the calculated relative range exceeds a predefined threshold.

In one example, a spoofing alert is output when a current computed distance (range) from a GNSS satellite 420a to an SBAS satellite 430a is greater than a predefined threshold with respect to a predicted distance between GNSS satellite 420a and SBAS satellite 430a. In another example, a spoofing alert is output when a current computed range from GNSS satellite 420a to a GNSS satellite 420b is greater than a predefined threshold with respect to a predicted distance between GNSS satellite 420a and GNSS satellite 420b.

If a spoofer changes the SBAS satellite position, then it will be directly caught in a first step by the known position of the SBAS satellite. If the spoofer changes GNSS satellite positions without changing the SBAS satellite position, then this change will be caught in a second step of the validation. If the spoofer changes the GNSS and SBAS satellite positions together, then this change will be caught by prediction positioning from past ephemeris data for both GNSS and SBAS satellites.

The SBAS and GNSS satellite orbital information is also seamlessly available from IGS when seamlessly connected to ground through 4G/5G, Satcom communication links, etc., which facilitates computation of distance information between the satellites. This data can be directly used for comparing the distance computed out of the received GNSS/SBAS signal. In addition, UAM vehicles, UAS vehicles, and drones, which can be seamlessly connected to ground through modern communication links, can benefit from the present approach.

Also, in the future, when an aircraft is close to an airport, the aircraft will be able to access IGS data through connected communication links (e.g. 5G, Satcom, etc.). Thus, aircraft at lower altitudes (e.g., less than about 2 km) can benefit from the present GNSS spoofing detection techniques.

A computer or processor used in the present systems and methods can be implemented using software, firmware, hardware, or any appropriate combination thereof, as known to one of skill in the art. These may be supplemented by, or incorporated in, specially-designed application-specific integrated circuits (ASICs) or field programmable gate arrays (FPGAs). The computer or processor can also include functions with software programs, firmware, or other computer readable instructions for carrying out various process tasks, calculations, and control functions used in the present systems and methods.

The present methods can be implemented by computer executable instructions, such as program modules or components, which are executed by at least one processor. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer- or processor-readable instructions. These instructions are typically stored on any appropriate computer program product that includes a computer readable medium used for storage of computer readable instructions or data structures. Such a computer readable medium can be any available media that can be accessed by a general purpose or special purpose computer or processor, or any programmable logic device.

Suitable processor-readable media may include storage or memory media such as magnetic or optical media. For example, storage or memory media may include conventional hard disks, compact discs, DVDs, Blu-ray discs, or other optical storage media; volatile or non-volatile media such as Random Access Memory (RAM); Read Only Memory (ROM), Electrically Erasable Programmable ROM (EEPROM), flash memory, and the like; or any other media that can be used to carry or store desired program code in the form of computer executable instructions or data structures.

From the foregoing, it will be appreciated that, although specific embodiments have been described herein for purposes of illustration, various modifications may be made without deviating from the scope of the invention as defined by the appended claims. Thus, the described embodiments are to be considered in all respects only as illustrative and not restrictive.

## Claims

1. A method (300) for detecting satellite signal spoofing, the method comprising:
monitoring a plurality of satellite signals, from Global Navigation Satellite System (100, 414) (GNSS) satellites and Satellite-based Augmentation System (SBAS) satellites, with a GNSS receiver;
obtaining a current time and satellite orbital parameters from the GNSS receiver, based on real-time satellite signals received from the GNSS and SBAS satellites (220, 240, 420, 420a, 420b 430, 430a) through a GNSS antenna;
retrieving past satellite orbital parameters from the GNSS receiver stored in a memory;
calculating predicted satellite orbital positions for the GNSS and SBAS satellites based on the past satellite orbital parameters stored in the memory, with respect to the current time;
computing current satellite orbital positions for the GNSS and SBAS satellites based on the current time and satellite orbital parameters, obtained based on current satellite signals from the GNSS and SBAS satellites received by the GNSS receiver;
determining at least one first distance value between two or more of the GNSS and/or SBAS satellites based on the predicted satellite orbital positions;
determining at least one second distance value between the two or more GNSS and/or SBAS satellites based on the current satellite orbital positions;
comparing the at least one first distance value and the at least one second distance value to obtain at least one discriminator value;
determining whether the at least one discriminator value is greater than a threshold level; and
outputting a spoofing alert signal when the at least one discriminator value is greater than the threshold level.

2. The method (300) of claim 1, further comprising:
determining whether the past satellite orbital parameters were updated at a time greater than a time period threshold;
if the past satellite orbital parameters were updated at a time greater than the time period threshold, then collecting real-time satellite orbital information for the GNSS and SBAS satellites (220, 240, 420, 420a, 420b 430, 430a) from the GNSS receiver, and storing the real-time satellite orbital information in the memory.

3. The method (300) of claim 2, wherein the past satellite orbital parameters are updated and stored for different timelines in separate storage locations of the memory.

4. The method (300) of claim 1, wherein the at least one first distance value and the at least one second distance value are determined by distance information comprising:
distance information between the GNSS and SBAS satellites (220, 240, 420, 420a, 420b 430, 430a);
distance information between a GNSS satellite and one or more other GNSS satellites; or
distance information between multiple GNSS satellites of different constellations.

5. The method (300) of claim 1, wherein the GNSS receiver is located in a vehicle comprising an aerial vehicle, a land vehicle, or a sea vehicle.

6. The method (300) of claim 1, wherein the GNSS receiver is located in an aerial vehicle (250, 410)comprising a manned aircraft, a helicopter, an unmanned aerial vehicle (UAV), an unmanned aircraft system (UAS) vehicle, an urban air mobility (UAM) vehicle, or a drone.

7. The method (300) of claim 1, wherein the GNSS satellites (220, 420, 420a, 420b) comprise Global Positioning System (GPS) satellites, GALILEO satellites, BEIDOU satellites, GLONASS satellites, or combinations thereof.

8. The method (300) of claim 1, wherein the SBAS satellites (240, 430, 430a) comprise Wide Area Augmentation System (WAAS) satellites, European Geostationary Navigation Overlay Service (EGNOS) satellites, GPS-Aided GEO Augmented Navigation (GAGAN) satellites, Multi-functional Satellite Augmentation System (MSAS) satellites, System for Differential Corrections and Monitoring (SDCM) satellites, or combinations thereof.

9. The method (300) of claim 1, wherein:
the spoofing alert signal is sent to a cockpit display to notify a pilot of spoofing detection; or;
the spoofing alert signal is made available for broadcast to other users that are airborne or on ground.

10. A system (100, 414) comprising:
at least one processor (102) onboard a vehicle;
a Global Navigation Satellite System (GNSS) receiver (414) onboard the vehicle and operatively coupled with the at least one processor; and
a GNSS spoofing detection module onboard the vehicle, the GNSS spoofing detection module including instructions to perform a method (300) comprising:
monitoring a plurality of satellite signals, from GNSS satellites (220, 420, 420a, 420b) and Satellite-based Augmentation System (SBAS) satellites (240, 430, 430a), with the GNSS receiver;
obtaining a current time and satellite orbital parameters from the GNSS receiver, based on real-time satellite signals received from the GNSS and SBAS satellites through a GNSS antenna;
retrieving past satellite orbital parameters from the GNSS receiver stored in a memory;
calculating predicted satellite orbital positions for the GNSS and SBAS satellites based on the past satellite orbital parameters stored in the memory with respect to the current time;
computing current satellite orbital positions for the GNSS and SBAS satellites based on the current time and satellite orbital parameters, obtained based on current satellite signals from the GNSS and SBAS satellites received by the GNSS receiver;
determining at least one first distance value between two or more of the GNSS and/or SBAS satellites based on the predicted satellite orbital positions;
determining at least one second distance value between the two or more GNSS and/or SBAS satellites based on the current satellite orbital positions;
comparing the at least one first distance value and the at least one second distance value to obtain at least one discriminator value;
determining whether the at least one discriminator value is greater than a threshold level; and
outputting a spoofing alert signal when the at least one discriminator value is greater than the threshold level.

## Patentansprüche

1. Verfahren (300) zum Detektieren von Satellitensignal-Spoofing, das Verfahren umfassend:
Überwachen einer Vielzahl von Satellitensignalen von Globalnavigationssatellitensystem (100, 414) (GNSS)-Satelliten und Satellitengestütztes-Augmentierungssystem(SBAS)-Satelliten mit einem GNSS-Empfänger;
Erhalten einer aktuellen Zeit und von Satellitenorbitalparametern von dem GNSS-Empfänger auf Basis von Echtzeitsatellitensignalen, die von den GNSS- und SBAS-Satelliten (220, 240, 420, 420a, 420b 430, 430a) durch eine GNSS-Antenne empfangen werden;
Abrufen von in einem Speicher gespeicherten früheren Satellitenorbitalparametern von dem GNSS-Empfänger;
Kalkulieren von vorhergesagten Satellitenorbitalpositionen für die GNSS- und SBAS-Satelliten auf Basis der in dem Speicher gespeicherten früheren Satellitenorbitalparameter in Bezug auf die aktuelle Zeit;
Berechnen von aktuellen Satellitenorbitalpositionen für die GNSS- und SBAS-Satelliten auf Basis der aktuellen Zeit und der Satellitenorbitalparameter, die auf Basis von von dem GNSS-Empfänger empfangenen aktuellen Satellitensignalen von den GNSS- und SBAS-Satelliten erhalten werden;
Bestimmen mindestens eines ersten Abstandswertes zwischen zwei oder mehreren der GNSS- und/oder SBAS-Satelliten auf Basis der vorhergesagten Satellitenorbitalpositionen;
Bestimmen mindestens eines zweiten Abstandswertes zwischen den zwei oder mehreren GNSS- und/oder SBAS-Satelliten auf Basis der aktuellen Satellitenorbitalpositionen;
Vergleichen des mindestens einen ersten Abstandswertes und des mindestens einen zweiten Abstandswertes, um mindestens einen Diskriminatorwert zu erhalten;
Bestimmen, ob der mindestens eine Diskriminatorwert größer als ein Schwellenwertniveau ist; und
Ausgeben eines Spoofing-Warnsignals, wenn der mindestens eine Diskriminatorwert größer als das Schwellenwertniveau ist.

2. Verfahren (300) nach Anspruch 1, ferner umfassend:
Bestimmen, ob die früheren Satellitenorbitalparameter zu einer Zeit, die größer als ein Zeitraumschwellenwert ist, aktualisiert wurden;
wenn die früheren Satellitenorbitalparameter zu einer Zeit, die größer als der Zeitraumschwellenwert ist, aktualisiert wurden, dann Sammeln von Echtzeit-Satellitenorbitalinformationen für die GNSS- und SBAS-Satelliten (220, 240, 420, 420a, 420b 430, 430a) von dem GNSS-Empfänger und Speichern der Echtzeit-Satellitenorbitalinformationen in dem Speicher.

3. Verfahren (300) nach Anspruch 2, wobei die früheren Satellitenorbitalparameter aktualisiert und für unterschiedliche Zeitleisten an getrennten Speicherorten des Speichers gespeichert werden.

4. Verfahren (300) nach Anspruch 1, wobei der mindestens eine erste Abstandswert und der mindestens eine zweite Abstandswert durch Abstandsinformationen bestimmt werden, umfassend:
Abstandsinformationen zwischen den GNSS- und SBAS-Satelliten (220, 240, 420, 420a, 420b 430, 430a);
Abstandsinformationen zwischen einem GNSS-Satelliten und einem oder mehreren anderen GNSS-Satelliten; oder
Abstandsinformationen zwischen vielfachen GNSS-Satelliten unterschiedlicher Konstellationen.

5. Verfahren (300) nach Anspruch 1, wobei der GNSS-Empfänger in einem Fahrzeug angeordnet ist, umfassend ein Luftfahrzeug, ein Landfahrzeug oder ein Seefahrzeug.

6. Verfahren (300) nach Anspruch 1, wobei der GNSS-Empfänger in einem Luftfahrzeug (250, 410) angeordnet ist, umfassend ein bemanntes Flugzeug, einen Helikopter, ein unbemanntes Luftfahrzeug (UAV), ein unbemanntes Flugzeugsystem (UAS-) Fahrzeug, ein Fahrzeug der urbanen Luftmobilität (UAM) oder eine Drohne.

7. Verfahren (300) nach Anspruch 1, wobei die GNSS-Satelliten (220, 420, 420a, 420b) Globalpositionierungssystem(GPS)-Satelliten, GALILEO-Satelliten, BEIDOU-Satelliten, GLONASS-Satelliten oder Kombinationen davon umfassen.

8. Verfahren (300) nach Anspruch 1, wobei die SBAS-Satelliten (240, 430, 430a) Wide-Area-Augmentation-System(WAAS)-Satelliten, European-Geostationary-Navigation-Overlay-Service(EGNOS)-Satelliten, GPS-Aided-GEO-Augmented-Navigation(GAGAN)-Satelliten, Multi-functional-Satellite-Augmentation-System(MSAS)-Satelliten, System-for-Differential-Corrections-and-Monitoring(SDCM)-Satelliten oder Kombinationen davon umfassen.

9. Verfahren (300) nach Anspruch 1, wobei:
das Spoofing-Warnsignal an eine Cockpitanzeige gesendet wird, um einen Piloten über die Spoofing-Detektion zu benachrichtigen; oder
das Spoofing-Warnsignal zur Übertragung an andere Benutzer zur Verfügung gestellt wird, die sich in der Luft oder am Boden befinden.

10. System (100, 414), umfassend:
mindestens einen Prozessor (102) an Bord eines Fahrzeugs;
einen Globalnavigationssatellitensystem(GNSS)-Empfänger (414) an Bord des Fahrzeugs und betriebsfähig mit dem mindestens einen Prozessor gekoppelt; und
ein GNSS-Spoofing-Detektionsmodul an Bord des Fahrzeugs, wobei das GNSS-Spoofing-Detektionsmodul Anweisungen beinhaltet, um ein Verfahren (300) durchzuführen, umfassend:
Überwachen einer Vielzahl von Satellitensignalen von GNSS-Satelliten (220, 420, 420a, 420b) und Satellitengestütztes-Augmentierungssystem(SBAS)-Satelliten (240, 430, 430a) mit dem GNSS-Empfänger;
Erhalten einer aktuellen Zeit und von Satellitenorbitalparametern von dem GNSS-Empfänger auf Basis von Echtzeitsatellitensignalen, die von den GNSS-und SBAS-Satelliten durch eine GNSS-Antenne empfangen werden;
Abrufen von in einem Speicher gespeicherten früheren Satellitenorbitalparametern von dem GNSS-Empfänger;
Kalkulieren von vorhergesagten Satellitenorbitalpositionen für die GNSS-und SBAS-Satelliten auf Basis der in dem Speicher gespeicherten früheren Satellitenorbitalparameter in Bezug auf die aktuelle Zeit;
Berechnen von aktuellen Satellitenorbitalpositionen für die GNSS- und SBAS-Satelliten auf Basis der aktuellen Zeit und der Satellitenorbitalparameter, die auf Basis von von dem GNSS-Empfänger empfangenen aktuellen Satellitensignalen von den GNSS- und SBAS-Satelliten erhalten werden;
Bestimmen mindestens eines ersten Abstandswertes zwischen zwei oder mehreren der GNSS- und/oder SBAS-Satelliten auf Basis der vorhergesagten Satellitenorbitalpositionen;
Bestimmen mindestens eines zweiten Abstandswertes zwischen den zwei oder mehreren GNSS- und/oder SBAS-Satelliten auf Basis der aktuellen Satellitenorbitalpositionen;
Vergleichen des mindestens einen ersten Abstandswertes und des mindestens einen zweiten Abstandswertes, um mindestens einen Diskriminatorwert zu erhalten;
Bestimmen, ob der mindestens eine Diskriminatorwert größer als ein Schwellenwertniveau ist; und
Ausgeben eines Spoofing-Warnsignals, wenn der mindestens eine Diskriminatorwert größer als das Schwellenwertniveau ist.

## Revendications

1. Procédé (300) de détection d'usurpation de signal satellitaire, le procédé comprenant :
la surveillance d'une pluralité de signaux satellitaires, provenant de satellites de système mondial de navigation par satellite (100, 414) (GNSS) et de satellites de système d'augmentation par satellite (SBAS), au moyen d'un récepteur GNSS ;
l'obtention d'une heure actuelle et de paramètres orbitaux de satellite à partir du récepteur GNSS, sur la base de signaux satellitaires en temps réel reçus des satellites GNSS et SBAS (220, 240, 420, 420a, 420b 430, 430a) par l'intermédiaire d'une antenne GNSS ;
la récupération de paramètres orbitaux de satellite passés à partir du récepteur GNSS stockés dans une mémoire ;
le calcul de positions orbitales de satellite prédites pour les satellites GNSS et SBAS sur la base des paramètres orbitaux de satellite passés stockés dans la mémoire, par rapport à l'heure actuelle ;
le calcul de positions orbitales de satellite actuelles pour les satellites GNSS et SBAS sur la base de l'heure actuelle et des paramètres orbitaux de satellite, obtenus sur la base de signaux satellitaires actuels provenant des satellites GNSS et SBAS reçus par le récepteur GNSS ;
la détermination d'au moins une première valeur de distance entre deux ou plusieurs des satellites GNSS et/ou SBAS sur la base des positions orbitales de satellite prédites ;
la détermination d'au moins une deuxième valeur de distance entre les deux ou plusieurs satellites GNSS et/ou SBAS sur la base des positions orbitales de satellite actuelles ;
la comparaison de l'au moins une première valeur de distance et de l'au moins une deuxième valeur de distance pour obtenir au moins une valeur de discriminateur ;
la détermination du fait de savoir si l'au moins une valeur de discriminateur est supérieure à un niveau de seuil ; et
la sortie d'un signal d'alerte d'usurpation lorsque l'au moins une valeur de discriminateur est supérieure au niveau de seuil.

2. Procédé (300) de la revendication 1, comprenant en outre :
la détermination du fait de savoir si les paramètres orbitaux de satellite passés ont été mis à jour à un instant supérieur à un seuil de période temporelle ;
si les paramètres orbitaux de satellite passés ont été mis à jour à un instant supérieur au seuil de période temporelle, alors la collecte d'informations orbitales de satellite en temps réel pour les satellites GNSS et SBAS (220, 240, 420, 420a, 420b 430, 430a) à partir du récepteur GNSS, et le stockage des informations orbitales de satellite en temps réel dans la mémoire.

3. Procédé (300) de la revendication 2, dans lequel les paramètres orbitaux de satellite passés sont mis à jour et stockés pour différentes lignes temporelles dans des emplacements de stockage distincts de la mémoire.

4. Procédé (300) de la revendication 1, dans lequel l'au moins une première valeur de distance et l'au moins une deuxième valeur de distance sont déterminées par des informations de distance comprenant :
des informations de distance entre les satellites GNSS et SBAS (220, 240, 420, 420a, 420b 430, 430a) ;
des informations de distance entre un satellite GNSS et un ou plusieurs autres satellites GNSS ; ou
des informations de distance entre de multiples satellites GNSS de différentes constellations.

5. Procédé (300) de la revendication 1, dans lequel le récepteur GNSS est situé dans un véhicule comprenant un véhicule aérien, un véhicule terrestre, ou un véhicule marin.

6. Procédé (300) de la revendication 1, dans lequel le récepteur GNSS est situé dans un véhicule aérien (250, 410) comprenant un aéronef habité, un hélicoptère, un véhicule aérien sans pilote (UAV), un véhicule de système d'aéronef sans pilote (UAS), un véhicule de mobilité aérienne urbaine (UAM), ou un drone.

7. Procédé (300) de la revendication 1, dans lequel les satellites GNSS (220, 420, 420a, 420b) comprennent des satellites de système de positionnement global (GPS), des satellites GALILEO, des satellites BEIDOU, des satellites GLONASS, ou des combinaisons de ceux-ci.

8. Procédé (300) de la revendication 1, dans lequel les satellites SBAS (240, 430, 430a) comprennent des satellites de système d'augmentation à couverture étendue (WAAS), des satellites de service de superposition de navigation géostationnaire européen (EGNOS), des satellites de navigation augmentée géostationnaire assistée par GPS (GAGAN), des satellites de système d'augmentation par satellite multifonctionnel (MSAS), des satellites de système de corrections différentielles et de surveillance (SDCM), ou des combinaisons de ceux-ci.

9. Procédé (300) de la revendication 1, dans lequel :
le signal d'alerte d'usurpation est envoyé à un affichage de poste de pilotage pour notifier à un pilote la détection d'usurpation ; ou
le signal d'alerte d'usurpation est rendu disponible pour une diffusion à d'autres utilisateurs se trouvant en vol ou au sol.

10. Système (100, 414) comprenant :
au moins un processeur (102) embarqué à bord d'un véhicule ;
un récepteur de système mondial de navigation par satellite (GNSS) (414) embarqué à bord du véhicule et couplé de manière opérationnelle à l'au moins un processeur ; et
un module de détection d'usurpation GNSS embarqué à bord du véhicule, le module de détection d'usurpation GNSS incluant des instructions pour mettre en œuvre un procédé (300) comprenant :
la surveillance d'une pluralité de signaux satellitaires, provenant de satellites GNSS (220, 420, 420a, 420b) et de satellites de système d'augmentation par satellite (SBAS) (240, 430, 430a), au moyen du récepteur GNSS ;
l'obtention d'une heure actuelle et de paramètres orbitaux de satellite à partir du récepteur GNSS, sur la base de signaux satellitaires en temps réel reçus des satellites GNSS et SBAS par l'intermédiaire d'une antenne GNSS ;
la récupération de paramètres orbitaux de satellite passés à partir du récepteur GNSS stockés dans une mémoire ;
le calcul de positions orbitales de satellite prédites pour les satellites GNSS et SBAS sur la base des paramètres orbitaux de satellite passés stockés dans la mémoire par rapport à l'heure actuelle ;
le calcul de positions orbitales de satellite actuelles pour les satellites GNSS et SBAS sur la base de l'heure actuelle et des paramètres orbitaux de satellite, obtenus sur la base de signaux satellitaires actuels provenant des satellites GNSS et SBAS reçus par le récepteur GNSS ;
la détermination d'au moins une première valeur de distance entre deux ou plusieurs des satellites GNSS et/ou SBAS sur la base des positions orbitales de satellite prédites ;
la détermination d'au moins une deuxième valeur de distance entre les deux ou plusieurs satellites GNSS et/ou SBAS sur la base des positions orbitales de satellite actuelles ;
la comparaison de l'au moins une première valeur de distance et de l'au moins une deuxième valeur de distance pour obtenir au moins une valeur de discriminateur ;
la détermination du fait de savoir si l'au moins une valeur de discriminateur est supérieure à un niveau de seuil ; et
la sortie d'un signal d'alerte d'usurpation lorsque l'au moins une valeur de discriminateur est supérieure au niveau de seuil.
